# EUROPÄISCHE PATENTSCHRIFT

(11) **EP 0 447 754 B1**
(45) Veröffentlichungstag und Bekanntmachung des Hinweises auf die Patenterteilung: **02.11.1995**
(21) Anmeldenummer: 91100715.1
(22) Anmeldetag: 22.01.1991
(51) Int. Cl.: G06K 11/12, G06K 11/10

(54) **Dateneingabegerät**
Data input device
Dispositif d'entrée de données

(30) Priorität: 19.03.1990 DE 4008806
(43) Veröffentlichungstag der Anmeldung: 25.09.1991
(73) Patentinhaber: Rafi GmbH & Co Elektrotechnische Spezialfabrik, 88276 Berg (DE)
(72) Erfinder: Borst, Joachim, Dipl.-Ing., W-7981 Berg b. Ravensburg (DE); Sauter, Armin, Dipl.-Phys., W-7901 Illerkirchberg (DE)
(74) Vertreter: Engelhardt, Guido, Dipl.-Ing.

(56) Entgegenhaltungen:
- EP-A- 0 073 373
- EP-A- 0 284 787
- WO-A-89/08892
- DE-C- 3 818 170
- PATENT ABSTRACTS OF JAPAN vol. 8, no. 245 (P-312)(1682) 10. November 1984 & JP- A-59 119 490 ( HITACHI SEISAKUSHO K.K. ) 10. Juli 1984

## Beschreibung

Die Erfindung bezieht sich auf ein Dateneingabegerät, das beispielsweise in Form einer Folientastatur ausgebildet ist und aus einer mit Kontakten versehenen Grundplatte sowie einer mit Abstand zu dieser angeordneten Abdeckplatte, die eine elastisch verformbare Zone und mit den Kontakten der Grundplatte zusammenwirkende Gegenkontakte aufweist, besteht.

Ein derartiges Bedienpanel ist durch die DE-C 2 33 20 116 bekannt. An der Grundplatte sowie der Abdeckplatte sind hierbei scheibenförmig ausgebildete Kontaktpaare angebracht, die als Taste wirken und mittels denen durch Niederdrücken der als Folie ausgebildeten Abdeckplatte jeweils ein Schaltvorgang ausgelöst wird.

Abgesehen davon, daß mitunter eine Vielzahl von Kontaktpaaren auf der Grundplatte und der Abdeckplatte anzuordnen sind und daß das Eingabegerät somit groß baut, ist des weiteren von Nachteil, daß eine analoge Veränderung der eingegebenen Werte nicht möglich ist. In solchen Fällen ist vielmehr mittels entsprechender Tasten eine gestufte Erhöhung oder Reduzierung der gewünschten Einstellung vorzunehmen. Dies ist jedoch zeitaufwendig und wird von Benutzern nicht ohne weiteres angenommen.

Aufgabe der Erfindung ist es daher, ein Dateneingabegerät der vorgenannten Gattung zu schaffen, mittels dem es auf sehr einfache Weise möglich ist, nicht nur eine Schaltfunktion auszuführen, sondern auch den vorbestimmten Wert unmittelbar zu übertragen, ohne daß dazu mehrere Schaltvorgänge vorzunmehmen sind. Der dafür erforderliche Bauaufwand soll gering gehalten werden, und Störungen sollen weitgehend ausgeschlossen sein, vor allem aber soll auch die Bedienbarkeit, z. B. von Haushaltsgeräten, die mit einer derartigen Dateneingabe ausgestattet werden, erleichtert werden.

Gemäß der Erfindung wird dies bei einem Dateneingabegerät der vorgenannten Art dadurch erreicht, daß die Kontakte der Grundplatte und die Gegenkontakte der Abdeckplatte jeweils durch eine oder mehrere in sich geschlossene Kontaktbahnen mit unterschiedlicher Leitfähigkeit gebildet sind, die unmittelbar mit einer oder mehreren Anschlußleiterbahnen versehen oder denen mit Anschlußleiterbahnen ausgestattete Zwischenglieder zugeordnet sind.

Zweckmäßig ist es hierbei, bei an den beiden Enden der Kontaktbahnen der Grundplatte angebrachten Anschlußleiterbahnen diese parallel zueinander auf einer Seite der Grundplatte anzuordnen und der Kontaktbahn der Abdeckplatte als Zwischenglied zwei beiderseits der Kontaktbahn der Grundplatte auf dieser angebrachte Kontaktschienen zuzuordnen, wobei diese jeweils mit einer vorzugsweise parallel zu den Anschlußleiterbahnen der Kontaktbahn der Grundplatte angeordnete Anschlußleiterbahnen versehen und die Anschlußleiterbahnen der Kontaktschienen durch in diese eingearbeitete Freisparungen gebildet sein können.

Vorteilhaft ist es des weiteren, die Kontaktbahnen der Grundplatte und der Abdeckplatte vertikal übereinander anzuordnen und wenn die Kontaktbahn der Grundplatte einen höheren Ohm'schen Widerstand aufweist als die Kontaktbahn der Abdeckplatte bzw. die dieser zugeordneten Kontaktschienen. Dies kann durch einen auf der Grundplatte aufgebrachten Graphitbelag bewerkstelligt werden.

Nach einer andersartigen Ausgestaltung kann die Kontaktbahn der Grundplatte im Bereich der Kontaktbahn der Abdeckplatte meanderförmig aus Abschnitten zusammengesetzt werden, und zwar derart, daß einzelne Abschnitte achssenkrecht zu der Kontaktbahn der Abdeckplatte mit seitlichem Abstand zueinander und die diese verbindenden Abschnitte seitlich neben der Kontaktbahn der Abdeckplatte angeordnet sind. Die seitlich neben der Kontaktbahn der Abdeckplatte vorzugsweise parallel zu dieser verlaufenden und durch einen Graphitbelag gebildeten Abschnitte der Kontaktbahn der Grundplatte sollten wiederum einen höheren Ohm'schen Widerstand aufweisen als die mit der Kontaktbahn der Abdeckplatte zusammenwirkenden Abschnitte.

Die Kontaktbahn der Grundplatte kann aber auch parallel zur Kontaktbahn der Abdeckplatte seitlich neben dieser angeordnet und an der Kontaktbahn der Grundplatte können mit seitlichem Abstand zueinander Kontaktfinger angebracht sein, mit denen die Kontaktbahn der Abdeckplatte unmittelbar oder über ein Zwischenglied zusammenwirkt. Als Zwischenglied kann bei dieser Ausführungsform eine rechenförmig ausgebildete und mit einer Anschlußleiterbahn versehene Kontaktschiene vorgesehen werden, die die Kontaktfinger der Kontaktbahn der Grundplatte aufnimmt und die über die Kontaktbahn der Abdeckplatte mit den Kontaktfingern elektrisch verbindbar ist.

Angebracht ist es ferner, das Dateneingabegerät an eine Auswertelektronik anzuschließen, die mit einer Anzeigeeinheit verbunden ist.

Wird ein Dateneingabegerät gemäß der Erfindung ausgebildet, in dem die Kontakte der Grundplatte und die Gegenkontakte der Abdeckplatte als Kontaktbahnen ausgebildet werden, so ist es möglich, durch Betätigung der Abdeckplatte im Bereich der elastisch verformbaren Zone einen Wert zu übermitteln, der in einem unmittelbaren Zusammenhang steht mit dem Ort der gewählten Betätigung. Durch die Verbindung der Kontaktbahn der Abdeckplatte mit der Kontaktbahn der Grundplatte kann nämlich aufgrund der unterschiedlichen Leitfähigkeiten dieser zusammenwirkenden Kontaktbahnen eine Stromstärke oder eine Spannungshöhe abgenommen werden, die abhängig ist von der Länge der jeweils durchflossenen Kontaktbahn. Und da die Strom- oder Spannungsänderungen proportional zu der durchflossenen Kontaktbahn mit dem höheren Ohm'schen Widerstand ist, ist eine Wertermittlung analog zu dem Betätigungsort gegeben. Wertänderungen sind demnach nicht mehr vorzunehmen, vielmehr kann durch Niederdrücken der Kontaktbahn der Abdeckplatte an einer bestimmten Stelle sofort der zugeordnete Wert übertragen und gegebenenfalls auch angezeigt werden. Die Handhabung eines mit einer vorschlagsgemäß ausgebildeten Dateneingabeeinrichtung ausgestatteten Gerätes, insbesondere eines Haushaltsgerätes, kann auf diese Weise sehr vereinfacht werden.

In der Zeichnung sind einige Ausführungsbeispiele des gemäß der Erfindung ausgebildeten Dateneingabegerätes dargestellt, die nachfolgend im einzelnen erläutert sind. Hierbei zeigt:
- Figur 1: ein Dateneingabegerät mit als Kontaktbahnen ausgebildeten Kontakten in einer perspektivischen Darstellung, teilweise ausgebrochen,
- Figur 2: eine abgewandelte Ausgestaltung des Dateneingabegerätes nach Figur 1,
- Figuren 3 bis 5: andersartige Ausführungsformen der zusammenwirkenden Kontaktbahnen bei dem Dateneingabegerät nach Figur 1, jeweils in Draufsicht, und
- Figur 6: das Dateneingabegerät nach Figur 1 mit einer nachgeschalteten Auswertelektronik und einer Anzeigeeinheit.

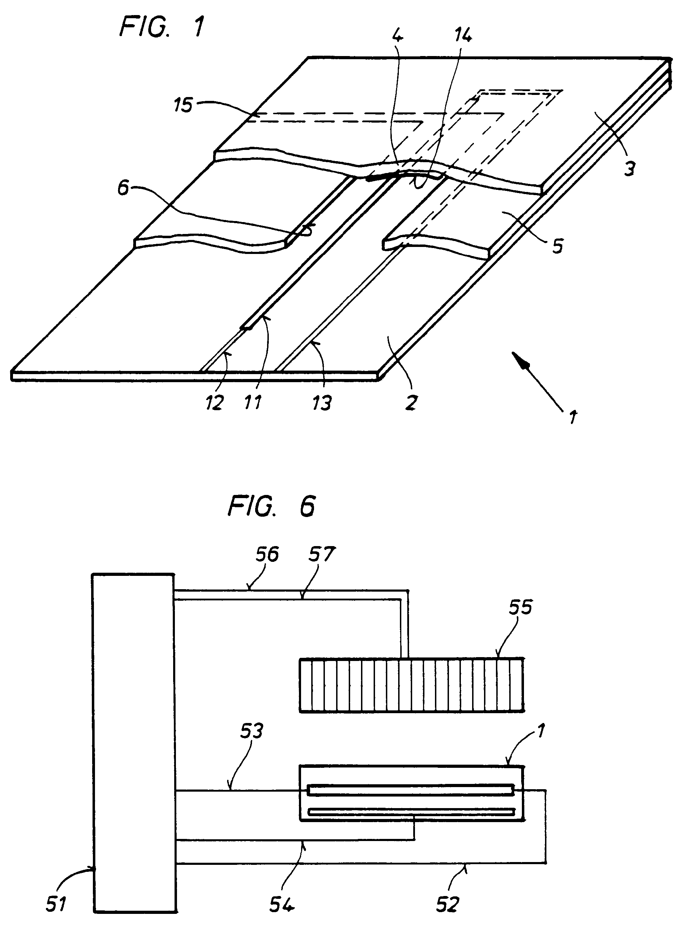

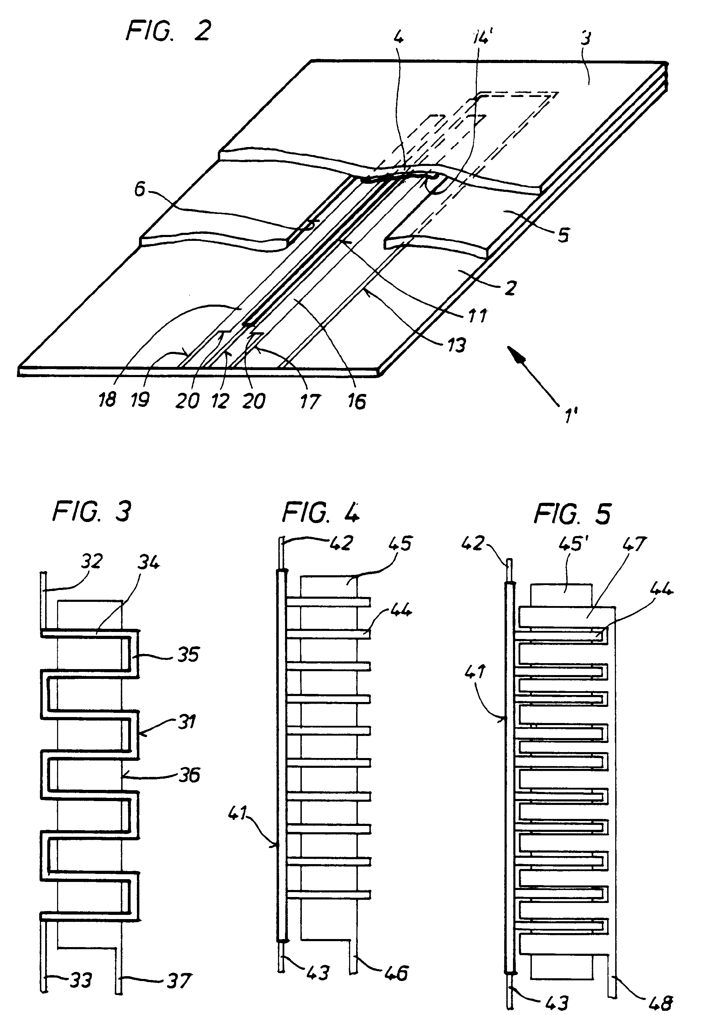

Das in den Figuren 1 und 2 dargestellte und mit 1 bzw. 1′ bezeichnete Dateneingabegerät besteht im wesentlichen jeweils aus einer Grundplatte 2, einer mit Abstand zu dieser angeordneten Abdeckplatte 3, die eine elastisch verformbare Zone 4 aufweist, sowie einer an der Grundplatte 2 angebrachten Kontaktbahn 11 und einer an der Abdeckplatte 3 im Bereich der elastisch verformbaren Zone 4 vorgesehenen Kontaktbahn 14. Zwischen der Grundplatte 2 und der Abdeckplatte 3 ist eine Distanzplatte 5 eingesetzt, die eine rechteckige Ausnehmung 6 aufweist. Durch die Distanzplatte 5 ist der zur Unterbrechung des Kontaktes zwischen den Kontaktbahnen 11 und 14 erforderliche Abstand geschaffen. Die Kontaktbahn 11, die aus einem hochohmigen Material, beispielsweise aus einem Graphitbelag, besteht, ist mit zwei parallel nebeneinander auf der Grundplatte 2 angeordneten Anschlußleiterbahnen 12 und 13, die aus einem niederohmigen Werkstoff, z. B. Silberleitlack, hergestellte Kontaktbahn 14 ist mit einer seitlich abgeführten Anschlußleiterbahn 15 ausgestattet.

Wird die Kontaktbahn 14 mit der Kontaktbahn 11 an einer ausgewählten Stelle durch Niederdrücken der elastisch verformbaren Zone 4 der Abdeckplatte 2 mit Hilfe eines Fingers oder eines anderen Gegenstandes in Berührung gebracht, so kann an einem der Anschlußleiterbahnen 12, 13 oder 15 eine Stromstärke oder eine Spannungshöhe abgenommen werden, die proportional ist der Länge der bis zum Abgriff der durchflossenen Kontaktbahn 11, die bei diesem Ausführungsbeispiel den höheren Widerstandswert aufweist. Der Ort der Betätigung kann somit analog, wie dies in Figur 5 dargestellt ist, über Signalleitungen 52, 53 und 54 in eine an das Dateneingabegerät 1 angeschlossene Auswertelektronik 51 übertragen werden, mittels der beispielsweise über Leitungen 56 und 57 eine Anzeigeeinheit 55 ansteuerbar ist, durch die unmittelbar der jeweilige Ort der Bedienung des Dateneingabegerätes 1 angezeigt wird.

Bei dem Dateneingabegerät 1′ nach Figur 2 weist die Kontaktbahn 14 der Abdeckplatte 3 keine Anschlußleiterbahn auf. Um jedoch bei einer Betätigung die jeweilige in Abhängigkeit von dem Ort der Betätigung gegebene Stromstärke oder Spannungshöhe abnehmen zu können, sind seitliche neben der Kontaktbahn 11 auf der Grundplatte 2 zwei Kontaktschienen 16 und 18 angeordnet, die mit Anschlußleiterbahnen 17 und 19 ausgestattet sind. Die Anschlußleiterbahnen 17 und 19 sind hierbei durch in die Kontaktschienen 16 und 18 eingearbeitete Freisparungen 20 gebildet.

Gemäß Figur 3 ist die Kontaktbahn 31, die der Grundplatte 2 zugeordnet sein kann, meanderförmig aus einzelnen Abschnitten 34 und 35 zusammengesetzt und an den beiden Enden mit Anschlußleiterbahnen 32 und 33 versehen. Die Abschnitte 34 verlaufen hierbei achssenkrecht zu einer mit einer Anschlußleiterbahn 37 ausgestatteten Kontaktbahn 36, die Abschnitte 35 dagegen sind seitlich neben dieser angeordnet. Auf diese Weise ist es möglich, die jeweilige angewählte Position in diskreten Sprüngen auszuwerten. Auch können, um dies zu unterstützen, die Abschnitte 35 der Kontaktbahn 31 einen höheren Ohm'schen Widerstand aufweisen als die Abschnitte 34.

Bei der Ausgestaltung nach den Figuren 4 und 5 ist eine vorzugsweise der Grundplatte 2 zugeordnete Kontaktbahn 41 mit einem hohen Widerstandswert seitlich neben einer Kontaktbahn 45 mit einem niederen Widerstandswert angeordnet und mit Kontaktfingern 44 ausgestattet, die durch Niederdrücken mit der Kontaktbahn 45 elektrisch leitend verbunden werden können. An den Anschlußleiterbahnen 42 und 43 der Kontaktbahn 41 oder an einer Anschlußleiterbahn 46 der Kontaktbahn 45 kann somit wiederum ein in Abhängigkeit von dem Ort der Betätigung sich ergebender Strom- oder Spannungswert abgenommen werden.

Gemäß Figur 5 ist der Kontaktbahn 45′ eine Kontaktschiene 47 zugeordnet, die rechenförmig ausgebildet ist und die Kontaktfinger 44 der Kontaktschiene 41 aufnimmt. Außerdem ist die Kontaktschiene 47 mit einer Anschlußleiterbahn 48 versehen. Durch Niederdrücken eines der Kontaktfinger 44 und eines benachbarten Teils der Kontaktschiene 47 werden diese über die Kontaktbahn 45′ elektrisch miteinander verbunden, so daß an der Anschlußleiterbahn 47 ein Signal abgenommen werden kann, das der Länge des Teils der Kontaktbahn 41 entspricht, das von dem Strom durchflossen wird.

## Patentansprüche

1. Dateneingabegerät, beispielsweise in Form einer Folientastatur, bestehend aus einer mit Kontakten versehenen Grundplatte sowie einer mit Abstand zu dieser angeordneten Abdeckplatte, die eine elastisch verformbare Zone und mit den Kontakten der Grundplatte zusammenwirkende Gegenkontakte aufweist,
**dadurch gekennzeichnet,**
daß die Kontakte der Grundplatte (2) und die Gegenkontakte der Abdeckplatte (3) jeweils durch eine oder mehrere in sich geschlossene Kontaktbahnen (11;31; 41 bzw. 14, 14′; 36; 45, 45′) mit unterschiedlicher Leitfähigkeit gebildet sind, die unmittelbar mit einer oder mehreren Anschlußleiterbahnen (12, 13; 32, 33; 42, 43 bzw. 15; 37; 46) versehen oder denen mit Anschlußleiterbahnen (17; 19; 48) ausgestattete Zwischenglieder (Kontaktschienen 16,; 18; 47) zugeordnet sind.

2. Dateneingabegerät nach Anspruch 1,
**dadurch gekennzeichnet,**
daß bei an den beiden Enden der Kontaktbahn (11) der Grundplatte (2) angebrachten Anschlußleiterbahnen (12, 13) diese parallel zueinander auf einer Seite der Grundplatte (11) angeordnet sind.

3. Dateneingabegerät nach Anspruch 1 oder 2,
**dadurch gekennzeichnet,**
daß der Kontaktbahn (14′) der Abdeckplatte (3) als Zwischenglied zwei beiderseits der Kontaktbahn (11) der Grundplatte (2) auf dieser angebrachte Kontaktschienen (16; 18) zugeordnet sind, die jeweils mit einer vorzugsweise parallel zu den Anschlußleiterbahnen (12, 13) der Kontaktbahn (11) der Grundplatte (2) angeordnete Anschlußleiterbahnen (17; 19) versehen sind.

4. Dateneingabegerät nach Anspruch 3,
**dadurch gekennzeichnet,**
daß die Anschlußleiterbahnen (17; 19) der Kontaktschienen (16; 18) durch in diese eingearbeitete Freisparungen (20) gebildet sind.

5. Dateneingabegerät nach einem oder mehreren der Ansprüche 1 bis 4,
**dadurch gekennzeichnet,**
daß die Kontaktbahnen (11; 14, 14′) der Grundplatte (2) und der Abdeckplatte (3) vertikal übereinander angeordnet sind.

6. Dateneingabegerät nach einem oder mehreren der Ansprüche 1 bis 5,
**dadurch gekennzeichnet,**
daß die Kontaktbahn (11) der Grundplatte (2) einen höheren Ohm'schen Widerstand aufweist als die Kontaktbahn (14, 14′) der Abdeckplatte (2) bzw. die dieser zugeordneten Kontaktschienen (16; 18).

7. Dateneingabegerät nach Anspruch 6,
**dadurch gekennzeichnet,**
daß die Kontaktbahn (11) der Grundplatte (2) durch einen auf dieser aufgebrachten Graphitbelag gebildet ist.

8. Dateneingabegerät nach einem oder mehreren der Ansprüche 1 bis 4,
**dadurch gekennzeichnet,**
daß die Kontaktbahn (31) der Grundplatte im Bereich der Kontaktbahn (36) der Abdeckplatte meanderförmig aus Abschnitten (34, 35) zusammengesetzt ist, derart, daß einzelne Abschnitte (34) achssenkrecht zu der Kontaktbahn (36) der Abdeckplatte mit seitlichem Abstand zueinander und die diese verbindenden Abschnitte (35) seitlich neben der Kontaktbahn (36) der Abdeckplatte angeordnet sind.

9. Dateneingabegerät nach Anspruch 8,
**dadurch gekennzeichnet,**
daß die seitlich neben der Kontaktbahn (36) der Abdeckplatte vorzugsweise parallel zu dieser verlaufenden und durch einen Graphitbelag gebildeten Abschnitte (35) der Kontaktbahn (31) der Grundplatte einen höheren Ohm'schen Widerstand aufweisen als die mit der Kontaktbahn (36) der Abdeckplatte zusammenwirkenden Abschnitte (34).

10. Dateneingabegerät nach einem oder mehreren der Ansprüche 1 bis 4,
**dadurch gekennzeichnet,**
daß die Kontaktbahn (41) der Grundplatte parallel zur Kontaktbahn (45, 45′) der Abdeckplatte seitlich neben dieser angeordnet ist, und daß an der Kontaktbahn (41) der Grundplatte mit seitlichem Abstand zueinander Kontaktfinger (44) angebracht sind, mit denen die Kontaktbahn (45) der Abdeckplatte unmittelbar oder über ein Zwischenglied (Kontaktschiene 47) zusammenwirkt.

11. Dateneingabegerät nach Anspruch 10,
**dadurch gekennzeichnet,**
daß als Zwischenglied eine rechenförmig ausgebildete und mit einer Anschlußleiterbahn (48) versehene Kontaktschiene (47) vorgesehen ist, die die Kontaktfinger (44) der Kontaktbahn (41) der Grundplatte aufnimmt und die über die Kontaktbahn (45′) der Abdeckplatte mit den Kontaktfingern (44) elektrisch verbindbar ist.

12. Dateneingabegerät nach einem oder mehreren der Ansprüche 1 bis 11,
**dadurch gekennzeichnet,**
daß dieses an eine Auswertelektronik (51) angeschlossen ist, die mit einer Anzeigeeinheit (55) verbunden ist.

## Claims

1. Data input device, for example in the form of a foil keypad, consisting of a base plate fitted with contacts and a cover plate arranged at a distance from the base plate, whereby the cover plate has a flexibly deformable zone and counter contacts which interact with the contacts on the base plate,
**characterized in that,**
the contacts on the base plate (2) and the counter contacts on the cover plate (3) are in each case formed by means of one or more self-enclosed contact decks (11; 31; 41 or 14, 14′; 36; 45, 45′) which have varying degrees of conductive capacity and which are directly provided with one or more connecting circuit-board conductors (12, 13; 32, 33; 42, 43 or 15; 37; 46) or to which are allocated intermediate elements (contact bars 16; 18; 47) equipped with connecting circuit-board conductors (17; 19; 48).

2. Data input device in accordance with claim 1,
**characterized in that,**
if connecting circuit-board conductors (12, 13) are attached to both ends of the contact deck (11) of the base plate (2), these connecting circuit-board conductors (12, 13) are arranged in parallel with one another on one side of the base plate (11).

3. Data input device in accordance with claim 1 or 2,
**characterized in that,**
two contact bars (16; 18) are arranged as intermediate elements on the contact deck (14′) of the cover plate (3) on both sides of the contact deck (11) of the base plate (2) to which they are attached, whereby each of these contact bars (16; 18) has a connecting circuit-board conductor (17; 19) which is arranged, in a preferred embodiment, in parallel to the connecting circuit-board conductors (12, 13) of the contact deck (11) of the base plate (2).

4. Data input device in accordance with claim 3,
**characterized in that,**
the connecting circuit-board conductors (17; 19) of the contact bars (16; 18) are formed by notches (20) worked into the contact bars (16; 18).

5. Data input device in accordance with one or more of claims 1 to 4,
**characterized in that,**
the contact decks (11; 14, 14′) of the base plate (2) and of the cover plate (3) are arranged vertically above each other.

6. Data input device in accordance with one or more of claims 1 to 5,
**characterized in that,**
the contact deck (11) of the base plate (2) has a higher ohmic resistance than the contact deck (14, 14′) of the cover plate (3) or of the contact bars (16; 18) which are allocated to the base plate (2).

7. Data input device in accordance with claim 6,
**characterized in that,**
the contact deck (11) of the base plate (2) is formed by a graphite coating applied to the base plate (2).

8. Data input device in accordance with one or more of claims 1 to 4,
**characterized in that,**
the contact deck (31) of the base plate in the region of the contact deck (36) of the cover plate has a meandering structure and is composed of sections (34, 35) in such a manner that the individual sections (34) are arranged perpendicular to the contact deck (36) of the cover plate at a lateral distance from one another, and the sections (35) which link the sections (34) are arranged laterally adjacent to the contact deck (36) of the cover plate.

9. Data input device in accordance with claim 8,
**characterized in that,**
the sections (35) of the contact deck (31) of the base plate which run laterally adjacent to the contact deck (36) of the cover plate and, in a preferred embodiment, run parallel to the contact deck (36) and which are formed by a graphite coating have a higher ohmic resistance than the sections (34) which interact with the contact deck (36) of the cover plate.

10. Data input device in accordance with one or more of claims 1 to 4,
**characterized in that,**
the contact deck (41) of the base plate is arranged in parallel to the contact deck (45, 45′) of the cover plate and is positioned laterally adjacent to the contact deck (45, 45′), and that contact fingers (44) spaced out at lateral intervals to each other are attached to the contact deck (41) of the base plate, whereby the contact deck (45) of the cover plate interacts directly or via an intermediate element (contact bar 47) with these contact fingers (44).

11. Data input device in accordance with claim 10,
**characterized in that,**
a comb-shaped contact bar (47) with a connecting circuit-board conductor (48) is provided as the intermediate element with which the contact fingers (44) of the contact deck (41) of the base plate engage and which can be electrically connected to the contact fingers (44) via the contact deck (45′) of the cover plate.

12. Data input device in accordance with one or more of claims 1 to 4,
**characterized in that,**
the data input device is connected to an electronic evaluation unit (51) which is in turn connected to a display unit (55).

## Revendications

1. Dispositif d'entrée des données, par exemple sous forme d'un clavier à effleurement, comprenant une plaque de base munie de contacts ainsi qu'une plaque de recouvrement qui est disposée à une certaine distance de la plaque de base et qui comprend une zone élastique et des contre-contacts collaborant avec les contacts de la plaque de base,
caractérisé en ce que
les contacts de la plaque de base (2) et les contre-contacts de la plaque de recouvrement (3) sont formés respectivement par une ou plusieurs pistes de contact (11; 31; 41 ou 14, 14′; 36; 45, 45′) fermées en soi et possédant des pouvoirs de conduction différents, munies directement d'une ou de plusieurs pistes conductives (12, 13; 32, 33; 42, 43 ou 15; 37; 46) et auxquelles sont assignés des éléments intermédiaires (glissières de contact 16; 18; 47) munies de pistes conductives (17; 19; 48).

2. Dispositif d'entrée des données d'après la revendication 1,
caractérisé en ce que
s'il est prévu des pistes conductives (12, 13) aux deux extrémités de la piste de contact (11) de la plaque de base (2), elles sont disposées parallèlement l'une par rapport à l'autre sur un côté de la plaque de base (2).

3. Dispositif d'entrée des données d'après la revendication 1 ou 2,
caractérisé en ce que,
à la piste de contact (14′) de la plaque de recouvrement (3), il est assigné deux glissières de contact (16; 18) en tant qu'élément intermédiaire, montées de part et d'autre de la piste de contact (11) sur la plaque de base (2) et munies respectivement d'une piste conductive (17; 19) disposée de préférence parallèlement aux pistes conductives (12, 13) de la piste de contact (11) de la plaque de base (2).

4. Dispositif d'entrée des données d'après la revendication 3,
caractérisé en ce que
les pistes conductives (17; 19) des glissières de contact (16; 18) sont formées par des évidements (20) qui y sont pratiqués.

5. Dispositif d'entrée des données d'après une ou plusieurs des revendications 1 à 4,
caractérisé en ce que
les pistes de contact (11; 14, 14′) de la plaque de base (2) et de la plaque de recouvrement (3) sont disposées verticalement l'une au-dessus de l'autre.

6. Dispositif d'entrée des données d'après une ou plusieurs des revendications 1 à 5,
caractérisé en ce que
la piste de contact (11) de la plaque de base (2) ait une résistance ohmique plus élevée que la piste de contact (14, 14′) de la plaque de recouvrement (3) ou que les glissières de contact (16; 18) qui lui sont assignées.

7. Dispositif d'entrée des données d'après la revendication 6,
caractérisé en ce que
la piste de contact (11) de la plaque de base (2) est formée par une couche de graphite appliquée sur cette dernière.

8. Dispositif d'entrée des données d'après une ou plusieurs des revendications 1 à 4,
caractérisé en ce que
la piste de contact (31) de la plaque de base se compose, à l'endroit de la piste de contact (36) de la plaque de recouvrement, de sections sinueuses (34, 35), de sorte que les sections individuelles (34) soient disposées espacées latéralement et perpendiculairement à la piste de contact (36) de la plaque de recouvrement et que les sections (35) assurant leur liaison soient disposées sur le côté de la piste de contact (36) de la plaque de recouvrement.

9. Dispositif d'entrée des données d'après la revendication 8,
caractérisé en ce que
les sections (35) de la piste de contact (31) de la plaque de base, prévues à côté de la piste de contact (36) de la plaque de recouvrement, s'étendant de préférence parallèlement à celle-ci et formées par une couche de graphite, ont une résistance ohmique plus élevée que les sections (34) collaborant avec la piste de contact (36) de la plaque de recouvrement.

10. Dispositif d'entrée des données d'après une ou plusieurs des revendications 1 à 4,
caractérisé en ce que
la piste de contact (41) de la plaque de base est arrangée parallèlement et latéralement à la piste de contact (45, 45′) de la plaque de recouvrement et qu'il est prévu sur la piste de contact (36) de la plaque de base, espacé l'un de l'autre, des doigts de contact (44) avec lesquels la piste de con- tact (45) de la plaque de recouvrement collabore directement ou par le truchement d'un élément intermédiaire (glissière de contact 47).

11. Dispositif d'entrée des données d'après la revendication 10,
caractérisé en ce que,
en tant qu'élément intermédiaire, il est prévu une glissière de contact (47) sous forme d'un râteau, munie d'une piste conductive (48), recevant les doigts de contact (44) de la piste de contact (41) de la plaque de base et qui, au moyen de la piste de contact (45′) de la plaque de recouvrement, se laisse raccorder électriquement aux doigts de contact (44).

12. Dispositif d'entrée des données d'après une ou plusieurs des revendications 1 à 11,
caractérisée en ce que
celui-ci est branché sur une unité électronique d'évaluation (51) liée à une unité d'affichage (55).
